# EUROPÄISCHE PATENTSCHRIFT

(11) **EP 2 794 386 B1**
(45) Veröffentlichungstag und Bekanntmachung des Hinweises auf die Patenterteilung: **06.01.2016**
(21) Anmeldenummer: 12794289.4
(22) Anmeldetag: 26.11.2012
(51) Int. Cl.: B62D 21/15, B62D 25/08, B62D 25/20, B62D 29/00

(54) **AUFBAU FÜR EINEN KRAFTWAGEN, INSBESONDERE EINEN PERSONENKRAFTWAGEN, SOWIE VERFAHREN ZUM HERSTELLEN EINES SOLCHEN AUFBAUS**
STRUCTURE FOR A MOTOR VEHICLE, IN PARTICULAR A PASSENGER VEHICLE, AS WELL AS A METHOD FOR PRODUCING ONE SUCH STRUCTURE
CAISSE DE VÉHICULE À MOTEUR, EN PARTICULIER DE VOITURE, ET PROCÉDÉ PERMETTANT DE FABRIQUER UNE TELLE CAISSE

(30) Priorität: 20.12.2011 DE 102011089153
(43) Veröffentlichungstag der Anmeldung: 29.10.2014
(73) Patentinhaber: Bayerische Motoren Werke Aktiengesellschaft, 80809 München (DE)
(72) Erfinder: DIRSCHMID, Ferdinand, 85521 Ottobrunn (DE); RÖHRL, Sabine, 82110Germering (DE); WEISS, Thomas, 82340 Feldafing (DE)
(86) Internationale Anmeldenummer: PCT/EP2012/073643
(87) Internationale Veröffentlichungsnummer: WO 2013/092119

(56) Entgegenhaltungen:
- WO-A1-99/15238
- DE-A1-102005 011 975
- DE-A1-102008 049 762
- DE-A1-102008 062 007
- DE-A1-102010 022 158
- US-B1- 6 260 914

## Beschreibung

Aufbau für einen Kraftwagen, insbesondere einen Personenkraftwagen, sowie Verfahren zum Herstellen eines solchen Aufbaus

Die Erfindung betrifft einen Aufbau für einen Kraftwagen gemäß dem Oberbegriff von Patentanspruch 1 sowie ein Verfahren zum Herstellen eines solchen Aufbaus gemäß dem Oberbegriff von Patentanspruch 15.

Derartige Aufbauten sind aus dem Serienbau von Personenkraftwagen hinlänglich bekannt. Ein solcher Aufbau umfasst eine Stirnwand, durch welche eine Fahrgastzelle des Kraftwagens in Fahrzeuglängsrichtung nach vorne hin begrenzt ist. Die Stirnwand erstreckt sich dabei in Fahrzeugquerrichtung zwischen seitlichen Fahrzeugsäulen des Aufbaus.

Aus der DE 10 2008 062 007 A1 ist bereits ein Aufbau für einen Kraftwagen mit einer eine Fahrgastzelle nach vorne hin begrenzenden Stirnwand bekannt, welche sich zwischen seitlichen Fahrzeugsäulen des Aufbaus erstreckt.

Ein solcher Aufbau ist auch aus der DE 10 2006 055 721 A1 bekannt. Der Aufbau umfasst auch einen Mitteltunnel sowie einen Stirnwandquerträger, der zwei Seitenteile, die an den seitlichen Fahrzeugsäulen angebunden sind, sowie einen die Seitenteile verbindenden Mittelteil umfasst. Die Seitenteile des Stirnwandquerträgers sind dabei so geformt, dass sie an der Stirnwand wenigstens teilweise anliegen und dort an die Stirnwand angebunden sind. Der Mittelteil liegt wenigstens teilweise an dem Mitteltunnel an und ist zur Stirnwand beabstandet. Der Stirnwandquerträger ist in Fahrzeuglängsrichtung hinter der Stirnwand angeordnet und wird von der Stirnwand nach vorne hin überdeckt. Es hat sich gezeigt, dass ein solcher Aufbau ein verbesserungswürdiges Unfallverhalten bei einer unfallbedingten Kraftbeaufschlagung des Kraftwagens aufweist.

Es ist daher Aufgabe der vorliegenden Erfindung, einen Aufbau für einen Kraftwagen, insbesondere einen Personenkraftwagen, sowie ein Verfahren zum Herstellen eines

Aufbaus der eingangs genannten Art derart weiterzuentwickeln, so dass der Aufbau ein verbessertes Unfallverhalten aufweist.
Diese Aufgabe wird durch einen Aufbau für einen Kraftwagen mit den Merkmalen des Patentanspruchs 1 sowie durch ein Verfahren zum Herstellen eines solchen Aufbaus mit den Merkmalen des Patentanspruchs 15 gelöst. Vorteilhafte Ausgestaltungen mit zweckmäßigen und nicht-trivialen Weiterbildungen der Erfindung sind in den übrigen Ansprüchen angegeben.

Ein solcher Aufbau für einen Kraftwagen, insbesondere einen Personenkraftwagen, umfasst eine Stirnwand, mittels welcher eine Fahrgastzelle des Kraftwagens in Fahrzeuglängsrichtung nach vorne hin begrenzt ist. Die Stirnwand erstreckt sich in Fahrzeugquerrichtung zwischen seitlichen Fahrzeugsäulen des Aufbaus.

Erfindungsgemäß ist ein Trägerelement vorgesehen, welches, bezogen auf die Fahrzeuglängsrichtung an einer Vorderseite der Stirnwand abgestützt ist, sich in Fahrzeugquerrichtung erstreckt und die Fahrzeugsäulen zumindest teilweise nach vorne hin überdeckt. Das Trägerelement fungiert somit als Stützträger und dient dazu, unfallbedingte Lasten insbesondere bei einem Frontalaufprall des Kraftwagens abzustützen bzw. aufzufangen und vorteilhaft abzuleiten. Dadurch können die Stirnwand und somit die Fahrgastzelle vor unerwünschten Beschädigungen bei einer unfallbedingten Kraftbeaufschlagung des Kraftwagens, insbesondere bei einem Frontalaufprall, geschützt und unerwünschte Intrusionen in die Fahrgastzelle vermieden werden. Dies kommt der Sicherheit von Insassen der Fahrgastzelle zugute. Der erfindungsgemäße Aufbau weist somit ein verbessertes Unfallverhalten auf.

Das Trägerelement hat insbesondere die Funktion, die unfallbedingten Lasten, d.h. Aufprallkräfte bzw. Aufprallenergien, zumindest teilweise von der Stirnwand fernzuhalten und um diese in in Fahrzeuglängsrichtung hinter dem Trägerelement angeordnete Strukturen des Aufbaus abzuleiten. Infolge der Überdeckung der Fahrzeugsäulen durch das Trägerelement zumindest nach vorne hin können die unfallbedingten Lasten vorteilhaft in die Fahrzeugsäulen eingeleitet werden.

Vorzugsweise sind auch jeweilige, sich in Fahrzeughochrichtung nach unten hin an die Fahrzeugsäulen anschließende, seitliche und zumindest im Wesentlichen in Fahrzeuglängsrichtung verlaufende Seitenschweller durch das Trägerelement in Fahrzeuglängsrichtung nach vorne hin zumindest teilweise überdeckt. Dadurch können die unfallbedingten Lasten über das Trägerelement auch in die Seitenschweller abgeleitet und über diese um die Fahrgastzelle herum geführt werden. Dadurch kann die Gefahr einer unerwünschten Beschädigung der Fahrgastzelle besonders gering gehalten werden.

Das Trägerelement des erfindungsgemäßen Aufbaus kann die unfallbedingten Lasten auffangen und abstützen, da das Trägerelement in Fahrzeuglängsrichtung vor der Stirnwand angeordnet ist. Dabei kann das Trägerelement auch als Opferbauteil fungieren, indem es bei der unfallbedingten Kraftbeaufschlagung unter Energieverzehrung verformt wird und/oder kollabiert. Dadurch kann Aufprallenergie zumindest teilweise in Verformungsenergie umgewandelt, abgebaut und von der Fahrgastzelle und somit von den Insassen des Kraftwagens ferngehalten werden. So kann die Stirnwand die unfallbedingte Kraftbeaufschlagung ohne unerwünschte Beschädigungen überstehen.

In besonders vorteilhafter Ausgestaltung der Erfindung ist das Trägerelement zumindest im Wesentlichen aus einem faserverstärkten Kunststoff gebildet. Dadurch weist das Trägerelement eine besonders hohe Steifigkeit und/oder Festigkeit auf. Dies ist dem vorteilhaften Unfallverhalten des erfindungsgemäßen Aufbaus zuträglich. Insbesondere ist es möglich, das Trägerelement bedarfsgerecht an insbesondere bei der unfallbedingten Kraftbeaufschlagung auftretende Belastungen anzupassen und entsprechend seiner Form und/oder seiner Wanddicke auszugestalten. Ein weiterer Vorteil ist, dass dadurch das Gewicht des Trägerelements und somit des gesamten Aufbaus besonders gering gehalten werden kann. Die hohe Steifigkeit des Trägerelements ist vorteilhaft für eine sehr hohe Gesamtsteifigkeit des Aufbaus, woraus sehr gute Fahrdynamikeigenschaften des Kraftwagens resultieren.

In den Kunststoff des Trägerelements zumindest teilweise eingebetteten Fasern des faserverstärkten Kunststoffs können Glasfasern und/oder Aramidfasern und/oder Kohlefasern und/oder anderweitige Fasern sein, mittels welchen der Kunststoff des Trägerelements verstärkt ist.

Vorzugsweise ist das aus dem faserverstärkten Kunststoff gebildete Trägerelement mittels eines RTM-Verfahrens (RTM - Resin Transfer Moulding), welches auch als Spritzpressverfahren bezeichnet wird, hergestellt. So kann das Trägerelement zeit- und kostengünstig sowie bedarfsgerecht hergestellt werden. Der Kunststoff des Trägerelements ist beispielsweise ein Duroplast oder ein Elastomer.

Das aus dem faserverstärkten Kunststoff gebildete Trägerelement kann aus einem oder aus mehreren Gelegen, insbesondere Fasermatten, gebildet sein. Bei den Gelegen bzw. Fasermatten kann es sich um umgeformte Gelege bzw. Fasermatten handeln, welche als Preforms bezeichnet werden und welche mit dem Kunststoff versehen werden. Die mehreren Gelege bzw. Fasermatten werden beispielsweise in jeweiligen Überlappungsbereichen in gegenseitiger Überlappung angeordnet, miteinander verbunden und umgeformt. Das Gelege bzw. die Gelege werden mit dem Kunststoff versehen, welcher als Matrixwerkstoff zur Aufnahme der Fasern dient. Das Trägerelement kann dadurch als besonders steifes und festes sowie leichtes, einstückiges Faserkunststoffverbundbauteil ausgebildet werden. Im Folgenden wird der einfachen Lesbarkeit wegen lediglich der Begriff Fasermatte bzw. Fasermatten verwendet. Es versteht sich, dass damit auch Gelege gemeint sind.

Zur bedarfsgerechten und belastungsangepassten Ausgestaltung des Trägerelements ist beispielsweise vorgesehen, dass sich wenigstens zwei der Fasermatten, aus welchen das Trägerelement hergestellt ist, voneinander unterschiedliche Dicken aufweisen. Dadurch kann das Trägerelement in wenigstens zwei Bereichen voneinander unterschiedliche Wanddicken und entsprechend voneinander unterschiedliche Eigenschaften aufweisen.

Alternativ oder zusätzlich kann vorgesehen sein, dass das Trägerelement in einem ersten Teilbereich eine erste Wanddicke aufweist, welche größer ist als wenigstens eine zweite Wanddicke in einem sich an den ersten Teilbereich anschließenden zweiten Teilbereich des Trägerelements, wobei die erste größere Wanddicke durch den Kunststoff des Trägerelements gebildet ist. Mit anderen Worten ist das Trägerelement in dem ersten Teilbereich mittels des Kunststoffs im Vergleich zum zweiten Teilbereich aufgedickt und entsprechend bedarfsgerecht ausgestaltet.

Alternativ oder zusätzlich ist es möglich, dass die größere erste Wanddicke in dem ersten Teilbereich dadurch gebildet ist, dass in dem ersten Teilbereich eine größere Anzahl an Fasermatten-Schichten vorgesehen ist als in dem zweiten Teilbereich. In dem ersten Teilbereich und in dem zweiten Teilbereich ist beispielsweise eine erste Fasermatte vorgesehen, wobei in dem ersten Teilbereich zusätzlich wenigstens eine weitere Fasermatte in Überdeckung mit der ersten Fasermatte angeordnet ist.

Eine solche Mehrzahl an Fasermatten-Schichten ist auch in dem Überlappungsbereich dargestellt, in welchem sich die Fasermatten, aus welchen das Trägerelement hergestellt ist, gegenseitig überlappen. In dem Überlappungsbereich weist das Trägerelement eine größere Wanddicke auf als in wenigstens einem, sich daran anschließenden und überlappungsfreien, weiteren Bereich. So kann beispielsweise der Überlappungsbereich oder - wenn mehrere Überlappungsbereiche vorgesehen sind - die Überlappungsbereiche entsprechend angeordnet werden, um dem erfindungsgemäßen Aufbau ein vorteilhaftes und belastungsangepasstes Unfallverhalten zu verleihen.

Ferner ist es möglich, dass sich die Fasermatten bzw. die Gelege oder die Fasermatten-Schichten bzw. Gelege-Schichten hinsichtlich ihrer Zusammensetzung bzw. ihres Aufbaus und/oder hinsichtlich ihrer jeweiligen Faserrichtung voneinander unterscheiden. Dadurch können die Fasermatten bzw. Gelege insbesondere hinsichtlich ihres Lastaufnahme- und Lastweiterleitungsvermögens bedarfsgerecht und funktionsangepasst ausgestaltet werden, da je nach Aufbau und/oder Faserrichtung Lastpfade geschaffen werden können, über die insbesondere unfallbedingte Lasten aufgenommen und abgeleitet werden können.

Darüber hinaus kann die Fasermatte bzw. das Gelege für sich hinsichtlich ihrer bzw. seiner Faserrichtung ausgerichtet und/oder hinsichtlich ihrer bzw. seiner Zusammensetzung bzw. Aufbaus bedarfsgerecht ausgestaltet werden. Dadurch können Lastpfade, über die Lasten ab- und weitergeleitet werden, funktionsangepasst ausgerichtet werden, da die Richtung der Lastpfade und damit das Lastaufnahmevermögen insbesondere von der Faserrichtung bzw. dem Aufbau abhängt.

In weiterer vorteilhafter Ausgestaltung ist die Stirnwand zumindest überwiegend durch das Trägerelement in Fahrzeuglängsrichtung nach vorne hin überdeckt. Das Trägerelement stellt somit ein zur Stirnwand zusätzliches, zweites Wandelement dar, durch welches die Stirnwand bei einer unfallbedingten Kraftbeaufschlagung des Kraftwagens geschützt werden kann.

Vorzugsweise ist das Trägerelement insbesondere unter Umgehung der Stirnwand auch an einem Fahrzeugboden des erfindungsgemäßen Aufbaus in Fahrzeuglängsrichtung abgestützt. Dadurch ist ein vorteilhafter Lastpfad gebildet, über welchen die unfallbedingten Lasten in den Fahrzeugboden - ohne über die Stirnwand geleitet zu werden - abgeleitet und somit von der Stirnwand ferngehalten werden können. Dies führt zu einem besonders guten Unfallverhalten des erfindungsgemäßen Aufbaus.

Bei einer weiteren vorteilhaften Ausführungsform der Erfindung ist das Trägerelement in zumindest einem ersten Teilbereich an der Stirnwand und in zumindest einem zweiten Teilbereich an den Fahrzeugsäulen abgestützt. Mit anderen Worten befindet sich das Trägerelement in Stützanlage mit den Fahrzeugsäulen, so dass ein vorteilhaftes Abstützen und Ableiten der unfallbedingten Lasten in die Fahrzeugsäulen realisiert ist.

In weiterer vorteilhafter Ausgestaltung ist die Stirnwand mit einem Stirnwandquerträger versehen, an welchem das Trägerelement abgestützt ist. Der Stirnwandquerträger erstreckt sich in Fahrzeugquerrichtung und ist in Fahrzeughochrichtung in einem oberen Bereich der Stirnwand oder oberhalb dieser angeordnet. Infolge der Abstützung des Trägerelements an dem Stirnwandquerträger können die unfallbedingten Lasten von dem Trägerelement auch an den Stirnwandquerträger abgeleitet werden.

Vorzugsweise ist der Stirnwandquerträger an den seitlichen Fahrzeugsäulen angebunden. Die unfallbedingten Lasten können somit von dem Stirnwandquerträger weiter in die Fahrzeugsäulen abgeleitet und von der Fahrgastzelle ferngehalten werden. Bei einer weiteren vorteilhaften Ausführungsform der Erfindung überdeckt das Trägerelement den Stirnwandquerträger in Fahrzeuglängsrichtung nach vorne hin zumindest bereichsweise, insbesondere zumindest überwiegend. Dadurch kann zunächst das Trägerelement die unfallbedingten Lasten aufnehmen und gezielt an den in Fahrzeuglängsrichtung dahinter liegenden Stirnwandquerträger ableiten.

Der Stirnbandquerträger ist vorteilhafterweise zumindest im Wesentlichen aus einem faserverstärkten Kunststoff gebildet. Dadurch weist er eine hohe Steifigkeit und Festigkeit sowie ein geringes Gewicht auf.

In weiterer vorteilhafter Ausgestaltung ist zwischen der Stirnwand und dem Trägerelement wenigstens ein Zwischenraum gebildet, in welchem ein an der Stirnwand und an dem Trägerelement abgestütztes Überbrückungselement angeordnet ist. Dadurch kann eine gezielte Einleitung und Weiterleitung von unfallbedingten Kräften erzielt werden, was für Schutz der Stirnwand vorteilhaft ist. Dies ist insbesondere der Fall, wenn auf einer dem Trägerelement und dem Überbrückungselement abgewandten und der Fahrgastzelle zugewandten Rückseite der Stirnwand ein Stützelement einerseits an der Stirnwand und andererseits an wenigstens einem, in Fahrzeuglängsrichtung hinter der Stirnwand angeordneten Strukturbauteil abgestützt ist. Dadurch können in die Stirnwand über das Überbrückungselement eingeleitete Lasten direkt wieder von der Stirnwand ab- und in das dahinter angeordnete Strukturbauteil eingeleitet werden. Dadurch ist ein sehr vorteilhafter Lastpfad dargestellt. Bei dem Strukturbauteil handelt es sich zum Beispiel um ein Tunnelelement des Fahrzeugbodens.

Zur bedarfsgerechten und lokalen Verstärkung des Trägerelements ist dieses mit wenigstens einem Verstärkungselement versehen. Dadurch können insbesondere die mechanischen Eigenschaften des Trägerelements bedarfsgerecht und lokal an auftretende Belastungen angepasst werden.

Vorzugsweise sind das Überbrückungselement und/oder das Verstärkungselement zumindest im Wesentlichen aus einem metallischen Werkstoff gebildet. Das Überbrückungselement und/oder das Verstärkungselement können aus einem Stahl, aus Aluminium bzw. einer Aluminiumlegierung oder aus einem anderweitigen Leichtmetall, insbesondere einer anderweitigen Leichtmetalllegierung, gebildet sein. Das Überbrückungselement und/oder das Verstärkungselement können dadurch eine besonders vorteilhafte Duktilität und/oder Festigkeit aufweisen, was vorteilhaft für das Unfallverhalten des Trägerelements und damit des erfindungsgemäßen Aufbaus ist. Eine hohe Duktilität des Verstärkungselements und/oder des Überbrückungselements trägt zur effizienten Umwandlung der unfallbedingten Lasten in Verformungsenergie bei. Eine besonders hohe Festigkeit führt zu einer hohen Strukturintegrität des Trägerelements, so dass die Fahrgastzelle vorteilhaft geschützt werden kann.

Das Überbrückungselement und/oder das Verstärkungselement können als Strangpressprofil mit wenigstens einer Kammer ausgebildet sein. Dadurch sind sie zeit- und kostengünstig herstellbar und weisen vorteilhafte mechanische Eigenschaften auf.

In weiterer vorteilhafter Ausgestaltung weist das Überbrückungselement und/oder das Verstärkungselement wenigstens ein Befestigungsmittel auf, an welchem ein Frontmodul des Kraftwagens und/oder ein anderweitiges Anbauteil an dem Aufbau befestigbar ist. Bei dem Befestigungsmittel handelt es sich beispielsweise um einen Schraubdom und/oder eine Einschrauböffnung, so dass das gegebenenfalls metallische Frontmodul bzw. das gegebenenfalls metallische Anbauteil fest mit dem Trägerelement verschraubt und an das Trägerelement angebunden werden kann.

Ist das Trägerelement zumindest im Wesentlichen aus dem faserverstärkten Kunststoff gebildet, so sind das Verstärkungselement und/oder das Überbrückungselement vorzugsweise aus dem metallischen Werkstoff gebildet. Somit ist auch das Befestigungsmittel aus dem metallischen Werkstoff gebildet. Dadurch ist eine feste und korrosionsvermeidende Anbindung des Frontmoduls bzw. des Anbauteils an dem Trägerelement ermöglicht.

Das Frontmodul umfasst beispielsweise einen Hilfsträger, an welchem ein Antriebsaggregat des Kraftwagens und/oder ein Nebenaggregat zu haltern ist. Bei dem Antriebsaggregat handelt es sich beispielsweise um wenigstens einen Elektromotor, mittels welchem der Kraftwagen antreibbar ist.

Bei einer weiteren besonders vorteilhaften Ausführungsform der Erfindung ist wenigstens ein Abstützelement für ein Feder- und/oder Dämpferelement eines Fahrwerks des Kraftwagens vorgesehen. Das Abstützelement dient dabei zur Anbindung und Abstützung des Feder- und/oder Dämpferelements an dem Aufbau, so dass das Abstützelement Kräfte vom Feder- und/oder Dämpferelement aufnehmen und abstützen kann. Das Abstützelement ist dabei, insbesondere in Fahrzeuglängsrichtung, am Trägerelement abgestützt. Die Abstützung des Abstützelements am Trägerelement weist vorteilhafterweise eine große, insbesondere großflächige, Erstreckung auf. Dadurch ist das Feder- und/oder Dämpferelement stabil und steif am Aufbau abgestützt. Dies trägt zu einer sehr guten Fahrdynamik des Kraftwagens bei.

Ist das Trägerelement mit der Stirnwand und/oder mit den Fahrzeugsäulen und/oder mit dem Stirnwandquerträger verklebt, so hält dies zum einen das Gewicht des Aufbaus gering. Zum anderen ist dadurch eine besonders feste sowie korrosionsverhindernde Verbindung realisiert.

Bei einer weiteren vorteilhaften Ausführungsform der Erfindung sind die Stirnwand- und/oder das Abstützelement und/oder die Fahrzeugsäulen und/oder die Seitenschweller zumindest im Wesentlichen aus einem faserverstärkten Kunststoff gebildet. Dies hält das Gewicht des Aufbaus und damit des Kraftwagens gering. So kann der Kraftwagen mit einem nur geringen Energiebedarf angetrieben werden. Darüber hinaus führt dies zu einer hohen Steifigkeit des Aufbaus, was mit vorteilhaften Fahrdynamikeigenschaften des Kraftwagens einhergeht.

Vorzugsweise ist der erfindungsgemäße Aufbau als selbsttragende Karosserie für einen Personenkraftwagen ausgebildet.

Zur Erfindung gehört auch ein Verfahren zum Herstellen eines Aufbaus, insbesondere eines erfindungsgemäßen Aufbaus, für einen Kraftwagen. Der Aufbau umfasst eine die Fahrgastzelle des Kraftwagens nach vorne hin begrenzende Stirnwand, welche sich zwischen seitlichen Fahrzeugsäulen des Aufbaus erstreckt.

Erfindungsgemäß wird an einer Vorderseite der Stirnwand ein sich in Fahrzeugquerrichtung erstreckendes Trägerelement abgestützt und in zumindest bereichsweiser Überdeckung mit den Fahrzeugsäulen angeordnet. Vorteilhafte Ausführungsformen des erfindungsgemäßen Aufbaus sind als vorteilhafte Ausführungsformen des erfindungsgemäßen Verfahrens anzusehen und umgekehrt.

Das erfindungsgemäße Verfahren ermöglicht die Realisierung eines verbesserten Unfallverhaltens des Aufbaus, da das Trägerelement infolge seiner Anordnung und Abstützung die Stirnwand vor unerwünschten Beschädigungen schützen kann. So können unerwünschte Intrusionen in die Fahrgastzelle vermieden werden, woraus eine sehr hohe Sicherheit für Insassen des Kraftwagens resultiert.

Im Rahmen des erfindungsgemäßen Verfahrens werden zunächst die Fahrzeugsäulen sowie die sich in Fahrzeughochrichtung nach unten hin anschließenden Seitenschweller sowie die Stirnwand mit dem Stirnwandquerträger hergestellt und miteinander gefügt. Ferner können weiteren Bauelemente des Aufbaus hergestellt und gefügt werden. Danach wird das Trägerelement vor der Stirnwand angeordnet und mit dieser sowie vorzugsweise mit den Fahrzeugsäulen, dem Stirnwandquerträger und den Seitenschwellern gefügt und entsprechend an diesem abgestützt, so dass die Stirnwand, die Fahrzeugsäulen, der Stirnwandquerträger und die Seitenschweller in Fahrzeuglängsrichtung nach vorne hin durch das Trägerelement überdeckt sind.

So kann bei einem Frontalaufprall des Kraftwagens auf eine Barriere zunächst das Trägerelement die unfallbedingten Lasten aufnehmen und gezielt in dahinter angeordnete Strukturen wie die Fahrzeugsäulen, den Stirnwandquerträger und die Seitenschweller ableiten und zumindest überwiegend von der Stirnwand zum Schutze dieser fernhalten.

Das Fügen des Trägerelements mit der Stirnwand sowie gegebenenfalls mit dem Stirnwandquerträger, den Fahrzeugsäulen und den Seitenschwellern erfolgt dabei im Rahmen der Montage des Aufbaus. Dadurch ist eine zeit- und kostengünstige Herstellung ermöglicht.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ausschnittsweise eine schematische Längsschnittansicht eines Aufbaus für einen Personenkraftwagen, an welchem ein Frontmodul des Personenkraftwagens angebunden ist;
- Fig. 2: ausschnittsweise eine weitere schematische Längsschnittansicht des Aufbaus mit dem Frontmodul gemäß Fig. 1;
- Fig. 3: ausschnittsweise eine schematische und perspektivische Vorderansicht des Aufbaus gemäß den Fig. 1 und 2;
- Fig. 4: ausschnittsweise eine schematische Perspektivansicht des Aufbaus mit dem Frontmodul gemäß den Fig. 1 und 2;
- Fig. 5: eine schematische Rückansicht eines Trägerelements des Aufbaus gemäß den Fig. 1 bis 4;
- Fig. 6: ausschnittsweise eine weitere schematische Vorderansicht des Aufbaus gemäß Fig. 3; und
- Fig. 7: ausschnittsweise eine schematische und perspektivische Unteransicht des Aufbaus mit dem Frontmodul gemäß den Fig. 1 und 2.

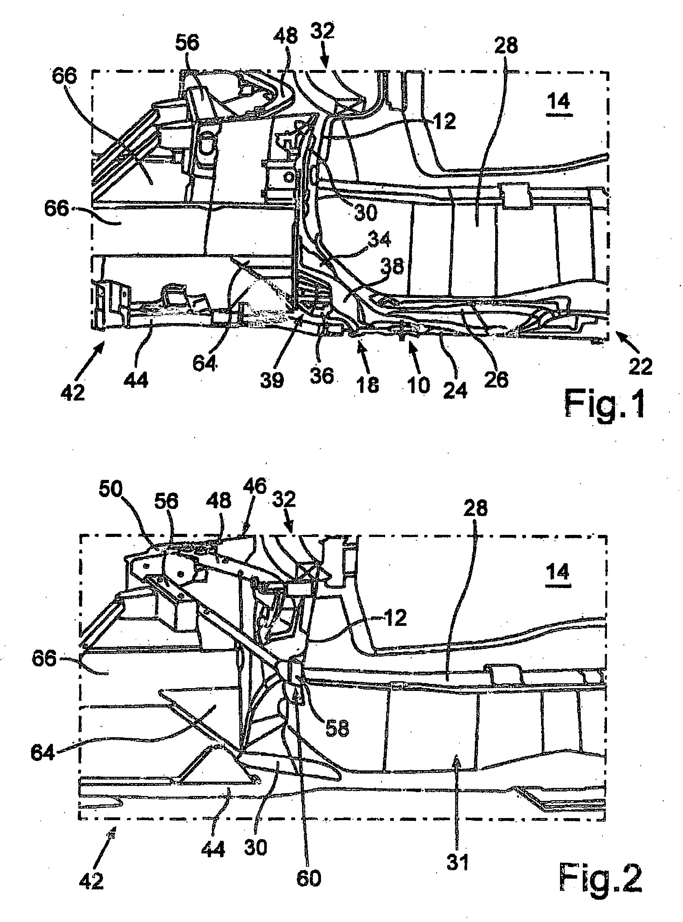

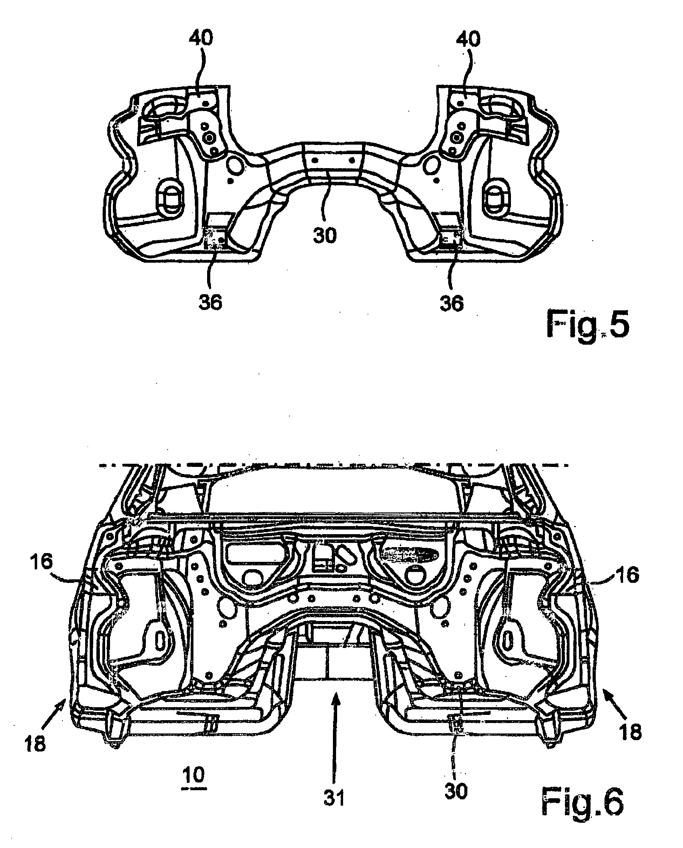

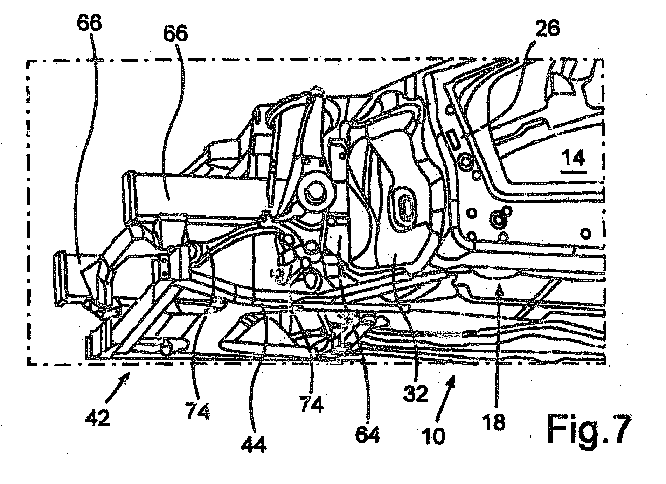

Die Fig. 1 zeigt einen Aufbau 10 für einen Personenkraftwagen. Wie in Zusammenschau mit den Fig. 2 bis 7 erkennbar ist, umfasst der Aufbau 10 eine Stirnwand 12, mittels welcher eine Fahrgastzelle 14 des Personenkraftwagens in Fahrzeuglängsrichtung nach vorne hin begrenzt ist. Der Aufbau 10 umfasst auch in Fahrzeugquerrichtung voneinander beabstandete, seitliche Fahrzeugsäulen 16, welche vorliegend A-Säulen des Aufbaus 10 sind. Die Stirnwand 12 erstreckt sich dabei in Fahrzeugquerrichtung zwischen den Fahrzeugsäulen 16.

An die Fahrzeugsäulen 16 schließen sich in Fahrzeughochrichtung nach unten hin jeweilige Seitenschweller 18 des Aufbaus 10 an. Die Fahrzeugsäulen 16 und die Seitenschweller 18 sind dabei zumindest teilweise einstückig miteinander ausgebildet, so dass die jeweilige Fahrzeugsäule 16 mit dem entsprechend zugehörigen Seitenschweller 18 gesamtheitlich auch als Seitenrahmenelement bezeichnet werden. Bei dem Aufbau 10 handelt es sich um eine selbsttragende Karosserie für den Personenkraftwagen.

Die Seitenrahmenelemente, die die Fahrzeugsäulen 16 und die Seitenschweller 18 umfassen, weisen ein Seitenrahmeninnenteil und ein Seitenrahmenaußenteil auf. Das Seitenrahmenaußenteil ist in Schalenbauweise aus einem faserverstärkten Kunststoff gebildet. Das Seitenrahmeninnenteil umfasst ein Flechtprofil 20 mit einem Schaumkern, der mit Fasern umflochten ist. Zudem umfasst das Seitenrahmeninnenteil umgeformte Gelege bzw. Fasermatten, wobei das Flechtprofil und die umgeformten Fasermatten (Preforms) mit einem Kunststoff versehen sind, so dass auch das Seitenrahmeninnenteil zumindest im Wesentlichen aus einem faserverstärkten Kunststoff mit dem umflochtenen Schaumkern gebildet sind.

Der Aufbau 10 umfasst ferner einen Fahrzeugboden 22 mit einer Bodenunterschale 24 und Bodenoberschalen 26, welche auf der Bodenunterschale 24 unter Ausbildung jeweils wenigstens eines Zwischenraums angeordnet sind. Auch die Bodenunterschale 24 und die Bodenoberschalen 26 sind zumindest im Wesentlichen aus einem faserverstärkten Kunststoff gebildet.

Durch die Bodenunterschale 24 ist ein Mitteltunnel 28 des Aufbaus 10 gebildet. Der Mitteltunnel 28 stellt einen Aufnahmeraum 31 bereit, welcher zur Aufnahme wenigstens einer elektrischen Speichereinrichtung, insbesondere eines Hochvoltspeichers, dient. Mittels der elektrischen Speichereinrichtung kann wenigstens ein Elektromotor des Personenkraftwagens mit elektrischem Strom versorgt werden, so dass der Elektromotor den Personenkraftwagen antreiben kann.

Der Personenkraftwagen ist beispielsweise als Hybrid-Fahrzeug oder als Elektrofahrzeug ausgebildet und kann so emissionsarm bzw. emissionsfrei angetrieben werden. Die Ausgestaltung der entsprechenden Komponenten des Aufbaus 10 zumindest im Wesentlichen aus einem faserverstärkten Kunststoff hält das Gewicht des Personenkraftwagens gering, so dass er mit einem nur geringen Energiebedarf angetrieben werden kann. Ferner führt dies zu einer sehr hohen Steifigkeit des Aufbaus 10, und damit zu besonders guten Fahrdynamikeigenschaften.

In Fahrzeuglängsrichtung vor der Stirnwand 12 ist ein von der Stirnwand 12 separat ausgebildetes Trägerelement 30 angeordnet, welches an einer Vorderseite 33 der Stirnwand 12 abgestützt ist, sich in Fahrzeugquerrichtung erstreckt und die Stirnwand 12 sowie die Fahrzeugsäulen 16 und die Seitenschweller 18 (Seitenrahmenelemente) großflächig nach vorne hin überdeckt. Dabei ist das Trägerelement 30 auch an den Fahrzeugsäulen 16 und den Seitenschwellern 18 abgestützt.

Das Trägerelement 30 ist aus einem kohlefaserverstärkten Kunststoff gebildet und vorzugsweise mittels eines RTM-Verfahrens hergestellt. Das Trägerelement 30 weist somit eine hohe Steifigkeit und Festigkeit sowie ein geringes Gewicht auf. Dies kommt der Steifigkeit des gesamten Aufbaus 10 sowie den Fahrdynamikeigenschaften des Personenkraftwagens zugute. Darüber hinaus kann das Trägerelement 30 somit hinsichtlich seines Unfallverhaltens bedarfsgerecht ausgebildet werden.

Die Stirnwand 12 ist mit einem Stirnwandquerträger 32 versehen, der mittels des Trägerelements 30 in Fahrzeuglängsrichtung nach vorne hin zumindest bereichsweise überdeckt und an welchem das Trägerelement 30 abgestützt ist. Dabei ist das Trägerelement 30 mit dem Stirnwandquerträger 32, mit der Stirnwand 12, mit den Fahrzeugsäulen 16 und den Seitenschwellern 18 verklebt.

Kommt es zu einem Frontalaufprall des Personenkraftwagens auf eine Barriere, so kann zunächst das Trägerelement 30 unfallbedingte Lasten aufnehmen. Von dem Trägerelement 30 werden die unfallbedingten Lasten zumindest überwiegend über vorteilhafte Lastpfade gezielt in in Fahrzeuglängsrichtung dahinter angeordnete Strukturen wie in den Stirnwandquerträger 32, die Fahrzeugsäulen 16 und die Seitenschweller 18 eingeleitet und zumindest überwiegend von der Stirnwand 12 ferngehalten. So kann die Stirnwand 12 vor unerwünschten Beschädigungen geschützt werden. Ebenso können dadurch unerwünschte Intrusionen in die Fahrgastzelle 14 vermieden werden.

Im Bereich der Seitenschweller 18 sind zumindest teilweise zwischen der Bodenunterschale 24 und den Bodenoberschalen 26 seitliche Stützträgerelemente 34 vorgesehen, welche jeweils einerseits unter Umgehung der Stirnwand 12 direkt am Trägerelement 30 und andererseits an der Bodenunterschale 24 und/oder an den Bodenoberschalen 26 abgestützt sind. Dadurch können die unfallbedingten Lasten direkt von dem Trägerelement 30 über die Stützträgerelemente 34 in den Fahrzeugboden 22 unter Umgehung der Stirnwand 12 abgeleitet werden. Die Stützträgerelemente 34 sind auch an den Seitenschwellern 18 abgestützt, so dass die unfallbedingten Lasten auch in die Seitenschweller 18 abgeleitet werden können.

Zur Darstellung einer besonders vorteilhaften Übertragung der unfallbedingten Lasten von dem Trägerelement 30 in den Fahrzeugboden 22 sind seitliche Aluminium-Strangpressprofile 36 vorgesehen, welche einerseits direkt am Trägerelement 30 und andererseits über einen jeweiligen Schuh 38 an dem Stützträgerelement 34 abgestützt sind. Die Schuhe 38 sind dabei beispielsweise als Blechbauteile ausgebildet. Die Alumium-Strangpressprofile 36 weisen ein Mehrkammerprofil 39 auf, so dass sie bei der unfallbedingten Kraftbeaufschlagung unter Energieverzehrung verformbar sind und zur Umwandlung der unfallbedingten Lasten in Verformungsenergie beitragen.

Die Aluminium-Strangpressprofile 36 sind dabei mit den korrespondierenden Schuhen 38 sowie mit dem Trägerelement 30 verklebt. Darüber hinaus sind Verstärkungselemente 40 vorgesehen, welche mit dem Trägerelement 30 verklebt sind. Die Verstärkungselemente 40 sind aus einem Stahl gebildet und tragen bei der unfallbedingten Kraftbeaufschlagung infolge ihrer vorteilhaften Duktilität ebenso zur Umwandlung der unfallbedingten Lasten in Verformungsenergie sowie zu einer hohen Strukturintegrität der Fahrgastzelle 14 bei. Ferner dienen die Verstärkungselemente 40 dazu, die unfallbedingten Lasten in Fahrzeugquerrichtung nach außen in Richtung der Seitenrahmenelemente zu leiten und in die Seitenrahmenelemente sowie in den Stirnwandquerträger 32 einzuleiten.

Die Verstärkungselemente 40 und die Aluminium-Strangpressprofile 36 sind über ihre Wanddicken und/oder ihre Werkstoffgüten skalierbar und dadurch hinsichtlich ihres Unfallverhaltens bedarfsgerecht auszugestalten, so dass dadurch der gesamte Aufbau 10 belastungsorientiert und bedarfsgerecht hinsichtlich seines Unfallverhaltens hergestellt werden kann.

An den Aufbau 10 ist ein Frontmodul 42 des Personenkraftwagens angebunden. Das Frontmodul 42 umfasst einen Hilfsträger 44, mittels welchem der Elektromotor zum Antreiben des Personenkraftwagens zu haltern ist. Darüber hinaus können beispielsweise Lenkerelemente 74 eines Fahrwerks und über diese Räder des Personenkraftwagens an dem Hilfsträger 44 angelenkt werden.

Das Frontmodul 42 umfasst auch eine Strebenanordnung 46 mit Domstreben 48, welche einerseits an Abstützelementen 50 des Frontmoduls 42 und andererseits am Stirnwandquerträger 32 angebunden sind.

Das Frontmodul 42 ist über weitere Streben 54 an dem Aufbau 10 angebunden und abgestützt. Die Streben 54 sind dabei einerseits an einem Querträgerelement 56 des Frontmoduls 42 und andererseits am Trägerelement 30 angebunden. Zur Anbindung am Trägerelement 30 ist ein Überbrückungselement 58 vorgesehen, welches einerseits an der Stirnwand 12 und andererseits am Trägerelement 30 abgestützt und aus einem metallischen Werkstoff, beispielsweise aus einem Stahl, gebildet ist. Dadurch können die Streben 54 fest mit dem Überbrückungselement 58 verschraubt werden, indem entsprechende Schrauben in das Überbrückungselement 58 eingeschraubt werden. Das Überbrückungselement 58 ist dabei in einem Zwischenraum 60 zwischen dem Trägerelement 30 und der Stirnwand 12 angeordnet.
Zur Anbindung des Frontmoduls 42 an das Trägerelement 30 stellen die Verstärkungselemente 40 des Trägerelements 30 vorliegend sechs zumindest im Wesentlichen in Fahrzeuglängsrichtung (x-Richtung) verlaufende Schrauböffnungen 70 bereit. Die aus einem Stahl gebildeten Verstärkungselemente 40 ermöglichen somit eine besonders feste Anbindung des Frontmoduls 42 am Trägerelement 30 und somit am Aufbau 10. Ferner stellen die Aluminium-Strangpressprofile 36 weitere Schrauböffnungen 72 bereit, an denen der Hilfsträger 44 sowie Eckelemente 64 anschraubbar sind. Die Eckelemente 64 sind dabei einerseits an Längsträgerelementen 66 des Frontmoduls 42 und andererseits am Trägerelement 30 abgestützt und erstrecken sich in jeweiligen, durch die Längsträgerelemente 66 und das Trägerelement 30 gebildeten Eckbereichen über Eck.

Bei dem Aufbau 10 ist lediglich eine nur sehr geringe Anzahl an Bauteilen miteinander zu fügen, da das Trägerelement 30 eine hohe Funktionsintegration aufweist und Verstärkungs- bzw. Aussteifungs- sowie Anbindungsfunktionen übernimmt. Wie anhand der Fig. 1 bis 7 erkennbar ist, wird das Trägerelement 30 im Rahmen der Montage und nicht etwa im Rahmen des Rohbaus zeitlich nach dem Herstellen der Seitenrahmenelementen und des Fügens dieser mit dem Stirnwandquerträger 32 und der Stirnwand 12 in Fahrzeuglängsrichtung von vorne gefügt und kann so die Stirnwand 12, den Stirnwandquerträger 32 und die Seitenrahmenelemente flächig überdecken.

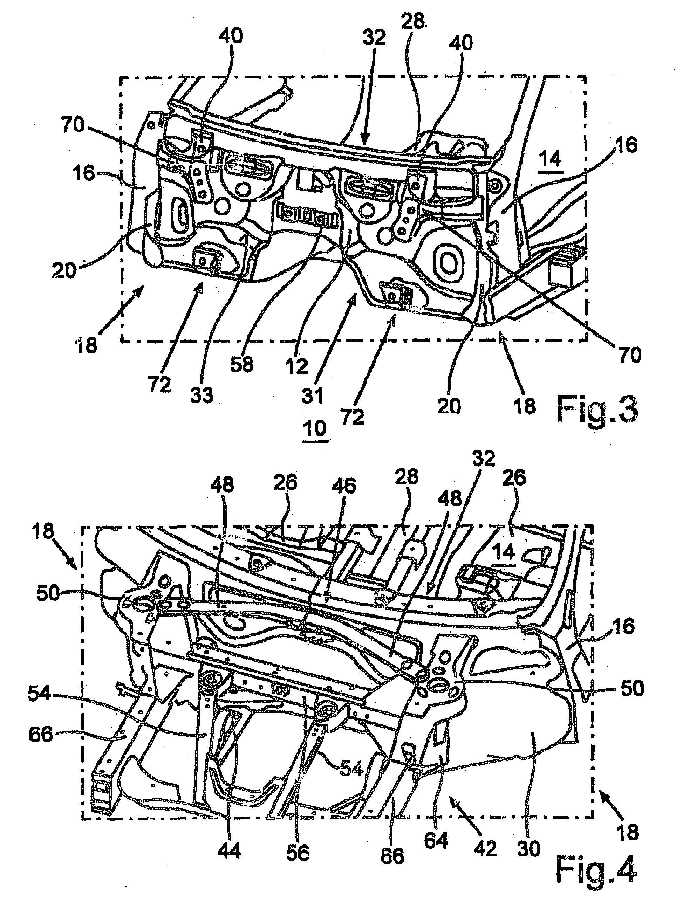

Die Abstützelemente 50 dienen zur Abstützung von Feder- und/oder Dämpferelementen des Fahrwerks des Personenkraftwagens. Wie insbesondere der Fig. 4 zu entnehmen ist, sind die Abstützelemente 50 in Fahrzeuglängsrichtung besonders massiv am Trägerelement 30 abgestützt. So können die Feder- und/oder Dämpferelemente stabil und steif über das Frontmodul 42 im Aufbau 10 abgestützt werden, wodurch eine sehr hohe Fahrdynamiksteifigkeit des Personenkraftwagens ermöglicht ist. Dabei können auch die Abstützelemente 50 zumindest im Wesentlichen aus einem faserverstärkten Kunststoff gebildet sein. Dies ist der hohen Steifigkeit und dem geringen Gewicht des Personenkraftwagens zuträglich.

Durch die Verstärkungselemente 40 können auch weitere, jeweilige Befestigungselemente gebildet sein, an denen wenigstens ein Beplankungselement, insbesondere eine Kotflügelverkleidung, des Personenkraftwagens befestigbar ist. Alternativ können von den Verstärkungselementen 40 separat ausgebildete Anbindungselemente am Trägerelement 30 befestigt, insbesondere verklebt, sein, über welche das Beplankungselement am Trägerelement 30 zu haltern ist.

### Bezugszeichenliste

- 10: Aufbau
- 12: Stirnwand
- 14: Fahrgastzelle
- 16: Fahrzeugsäule
- 18: Seitenschweller
- 20: Flechtprofil
- 22: Fahrzeugboden
- 24: Bodenunterschale
- 26: Bodenoberschale
- 28: Mitteltunnel
- 30: Trägerelement
- 31: Aufnahmeraum
- 32: Stirnwandquerträger
- 33: Vorderseite
- 34: Stüfzträgerelement
- 36: Aluminium-Strangpressprofil
- 38: Schuh
- 39: Mehrkammerprofil
- 40: Verstärkungselement
- 42: Frontmodul
- 44: Hilfsträger
- 46: Strebenanordnung
- 48: Domstrebe
- 50: Abstützelement
- 54: Strebe
- 56: Querträgerelement
- 58: Überbrückungselement
- 60: Zwischenraum
- 64: Eckelement
- 66: Längsträger
- 70: Schrauböffnungen
- 72: weitere Schrauböffnungen
- 74: Lenkerelement

## Patentansprüche

1. Aufbau (10) für einen Kraftwagen, insbesondere einen Personenkraftwagen, mit einer eine Fahrgastzelle (14) nach vorne hin begrenzenden Stirnwand (12), welche sich zwischen seitlichen Fahrzeugsäulen (16) des Aufbaus (10) erstreckt,
**dadurch gekennzeichnet, dass**
an einer Vorderseite (33) der Stirnwand (12) ein Trägerelement (30) abgestützt ist, welches sich in Fahrzeugquerrichtung erstreckt und die Fahrzeugsäulen (16) zumindest teilweise überdeckt.

2. Aufbau (10) nach Anspruch 1,
**dadurch gekennzeichnet, dass**
das Trägerelement (30) zumindest im Wesentlichen aus einem faserverstärkten Kunststoff gebildet ist.

3. Aufbau (10) nach einem der Ansprüche 1 oder 2,
**dadurch gekennzeichnet, dass**
die Stirnwand (12) zumindest überwiegend durch das Trägerelement (30) überdeckt ist.

4. Aufbau (10) nach einem der vorhergehenden Ansprüche,
**dadurch gekennzeichnet, dass**
das Trägerelement (30), insbesondere unter Umgehung der Stirnwand (12), an einem Fahrzeugboden (22), insbesondere an einem Tunnelelement (28) des Fahrzeugbodens (22), des Aufbaus (10) in Fahrzeuglängsrichtung abgestützt ist.

5. Aufbau (10) nach einem der vorhergehenden Ansprüche,
**dadurch gekennzeichnet, dass**
das Trägerelement (30) in zumindest einem ersten Teilbereich an der Stirnwand (12) und in zumindest einem zweiten Teilbereich an den Fahrzeugsäulen (16) abgestützt ist.

6. Aufbau (10) nach einem der vorhergehenden Ansprüche,
**dadurch gekennzeichnet, dass**
die Stirnwand (12) mit einem Stirnwandquerträger (32) versehen ist, an welchem das Trägerelement (30) abgestützt ist.

7. Aufbau (10) nach Anspruch 6,
**dadurch gekennzeichnet, dass**
das Trägerelement (30) den Stirnwandquerträger (32) in Fahrzeuglängsrichtung nach vorne hin zumindest bereichsweise überdeckt.

8. Aufbau (10) nach einem der vorhergehenden Ansprüche,
**dadurch gekennzeichnet, dass**
zwischen der Stirnwand (12) und dem Trägerelement (30) wenigstens ein Zwischenraum (60) gebildet ist, in welchem ein an der Stirnwand (12) und an dem Trägerelement (30) abgestütztes Überbrückungselement (58) angeordnet ist.

9. Aufbau (10) nach einem der vorhergehenden Ansprüche,
**dadurch gekennzeichnet, dass**
das Trägerelement (30) mit wenigstens einem Verstärkungselement (40) versehen ist, mittels welchem das Trägerelement (30) verstärkt ist.

10. Aufbau (10) nach einem der Ansprüche 8 oder 9,
**dadurch gekennzeichnet, dass**
das Überbrückungselement (58) und/oder das Verstärkungselement (40) zumindest im Wesentlichen aus einem metallischen Werkstoff gebildet ist.

11. Aufbau (10) nach einem der Ansprüche 8 bis 10,
**dadurch gekennzeichnet, dass**
das Überbrückungselement (58) und/oder das Verstärkungselement (40) wenigstens ein Befestigungsmittel (70) aufweist, mittels welchem ein Frontmodul (42) des Kraftwagens an dem Aufbau (10) befestigbar ist.

12. Aufbau (10) nach einem der vorhergehenden Ansprüche,
**dadurch gekennzeichnet, dass**
wenigstens ein Abstützelement (56) für ein Feder- und/oder Dämpferelement eines Fahrwerks des Kraftwagens vorgesehen ist, welches, insbesondere in Fahrzeuglängsrichtung, am Trägerelement (30) abgestützt ist.

13. Aufbau (10) nach Anspruch 6,
**dadurch gekennzeichnet, dass**
das Trägerelement (30) mit der Stirnwand (12) und/oder mit den Fahrzeugsäulen (16) und/oder mit dem Stirnwandquerträger (32) verklebt ist.

14. Aufbau (10) nach einem der vorhergehenden Ansprüche,
**dadurch gekennzeichnet, dass**
die Stirnwand (12) und/oder das Abstützelement (56) und/oder die Fahrzeugsäulen (16) zumindest im Wesentlichen aus einem faserverstärkten Kunststoff gebildet sind.

15. Verfahren zum Herstellen eines Aufbaus (10), insbesondere nach einem der vorhergehenden Ansprüche, für einen Kraftwagen, insbesondere einen Personenkraftwagen, mit einer eine Fahrgastzelle (14) nach vorne hin begrenzenden Stirnwand (12), welche sich zwischen seitlichen Fahrzeugsäulen (16) des Aufbaus (10) erstreckt,
**dadurch gekennzeichnet, dass**
an einer Vorderseite (33) der Stirnwand (12) ein sich in Fahrzeugquerrichtung erstreckendes Trägerelement (30) abgestützt und in zumindest bereichsweiser Überdeckung mit den Fahrzeugsäulen (16) angeordnet wird.

## Claims

1. A body (10) for a motor vehicle, especially a car, comprising an end wall (12) bounding the front of a passenger compartment (14) and extending between side columns (16) of the body, **characterised in that**
a bearing element (30) abuts a front side (33) of the end wall (12) and extends in the transverse direction of the vehicle and at least partly overlaps the columns (16).

2. A body (10) according to claim 1,
**characterised in that**
the bearing element (30) is substantially made of a fibre-reinforced plastics material.

3. A body (10) according to claim 1 or claim 2,
**characterised in that**
the end wall (12) is at least mostly overlapped by the bearing element (30).

4. A body (10) according to any of the preceding claims,
**characterised in that**
the bearing element (30), especially avoiding the end wall (12), abuts a vehicle floor (22), especially against a tunnel element (28) of the vehicle floor (22) of the body (10) in the longitudinal direction of the vehicle.

5. A body (10) according to any of the preceding claims,
**characterised in that**
the bearing element (30) abuts at least first part of the end wall (12) and at least a second part of the columns (16).

6. A body (10) according to any of the preceding claims,
**characterised in that**
the end wall (12) has a transverse member (32) which abuts the bearing element (30).

7. A body (10) according to claim 6,
**characterised in that**
the bearing element at least partly overlaps the transverse member (32) to the front in the longitudinal direction of the vehicle.

8. A body (10) according to any of the preceding claims,
**characterised in that**
at least one space (60) is formed between the end wall (12) and the bearing element (30) and contains a bridging element (58) abutting the end wall (12) and the bearing element (30).

9. A body (10) according to any of the preceding claims,
**characterised in that**
the bearing element (30) has at least one reinforcing element (40) by means of which the bearing element (30) is reinforced.

10. A body (10) according to claim 8 or claim 9,
**characterised in that**
the bridging element (58) and/or the reinforcing element (40) are made at least partly of a metallic material.

11. A body (10) according to any of claims 8 to 10,
**characterised in that**
the bridging element (58) and/or the reinforcing element (40) comprise at least one fastening means for fastening a front module (42) of the vehicle to the body (10).

12. A body (10) according to any of the preceding claims,
**characterised in that**
at least one abutting or supporting element (56) for a spring and/or damping element of a running gear of the vehicle is provided and abuts the bearing element (30), especially in the longitudinal direction of the vehicle.

13. A body (10) according to claim 6,
**characterised in that**
the bearing element (30) is stuck to the end wall (12) and/or to the columns (16) and/or to the transverse bearer (32).

14. A body (10) according to any of the preceding claims,
**characterised in that**
the end wall (12) and/or the abutting or supporting element (56) and/or the columns (16) are made at least substantially of a fibre reinforced plastic.

15. A method of producing a body (10) especially according to any of the preceding claims, for a motor vehicle, particularly a car, comprising an end wall (12) bounding the front of a passenger compartment (14) and extending between side columns (16) of the body (10),
**characterised in that**
a bearing element extending in the transverse direction of the vehicle abuts a front (33) of the end wall (12) and is disposed so as to overlap at least part of the columns (16).

## Revendications

1. Caisse (10) de véhicule automobile, notamment de véhicule de tourisme comportant une paroi frontale (12) délimitant l'avant de l'habitacle (14) et s'étendant entre deux colonnes latérales (16) de la caisse (10),
caisse **caractérisée en ce que**
un élément de support (30) s'appuie sur le côté avant (33) de la paroi frontale (12), cet élément de support s'étendant dans la direction transversale du véhicule et couvrant au moins partiellement les colonnes (16) du véhicule.

2. Caisse (10) selon la revendication 1,
**caractérisée en ce que**
l'élément de support (30) est au moins pour l'essentiel, en matière plastique renforcée par des fibres.

3. Caisse (10) selon l'une des revendications 1 ou 2,
**caractérisée en ce que**
la paroi frontale (12) est au moins couverte principalement par l'élément de support (30).

4. Caisse (10) selon l'une des revendications précédente,
**caractérisée en ce que**
l'élément de support (30) est appuyé dans la direction longitudinale du véhicule, notamment en contournant la paroi frontale (12), contre le plancher (22) du véhicule, notamment contre l'élément de tunnel (28) du plancher (22) de la caisse (10).

5. Caisse (10) selon l'une des revendications précédentes,
**caractérisée en ce que**
l'élément de support (30) est appuyé dans au moins une première zone partielle contre la paroi frontale (12) et dans au moins une seconde zone partielle contre les colonnes (16) de la caisse.

6. Caisse (10) selon l'une des revendications précédentes,
**caractérisée en ce que**
la paroi frontale (12) est munie d'un support transversal (32) sur lequel s'appuie l'élément de support (30).

7. Caisse (10) selon la revendication 6,
**caractérisée en ce que**
l'élément de support (30) couvre au moins par zone vers l'avant, le support transversal (32) de la paroi frontale, dans la direction longitudinale du véhicule.

8. Caisse (10) selon l'une des revendications précédentes,
**caractérisée en ce que**
entre la paroi frontale (12) et l'élément de support (30) subsiste au moins un espace intermédiaire (60) qui reçoit un élément formant pont (58) s'appuyant contre la paroi frontale (12) et contre l'élément de support (30).

9. Caisse (10) selon l'une des revendications précédentes,
**caractérisée en ce que**
l'élément de support (30) est muni d'au moins un élément de renforcement (40) qui le renforce.

10. Caisse (10) selon l'une des revendications 8 ou 9,
**caractérisée en ce que**
l'élément formant pont (58) et/ou l'élément de renforcement (40) sont réalisés pour l'essentiel en un matériau métallique.

11. Caisse (10) selon l'une des revendications 8 à 10,
**caractérisée en ce que**
l'élément formant pont (58) et/ou l'élément de renforcement (40) comportent au moins un moyen de fixation (70) qui fixe un module frontal (42) du véhicule à la carrosserie (10).

12. Caisse (10) selon la revendication 1,
**caractérisée par**
au moins un élément d'appui (56) pour un élément de ressort et/ou d'amortisseur du châssis du véhicule automobile et qui est appuyé notamment dans la direction longitudinale du véhicule sur l'élément de support (30).

13. Caisse (10) selon la revendication 6,
**caractérisée en ce que**
l'élément de support (30) est collé à la paroi frontale (12) et/ou aux colonnes (16) de la caisse et/ou au support transversal (32) de la paroi frontale.

14. Caisse (10) selon l'une quelconque des revendications précédentes,
**caractérisée en ce que**
la paroi frontale (12) et/ou l'élément d'appui (56) et/ou les colonnes (16) du véhicule sont réalisés au moins pour l'essentiel en une matière plastique renforcée par des fibres.

15. Procédé de réalisation d'une caisse (10), notamment selon l'une quelconque des revendications précédentes pour un véhicule, notamment un véhicule de tourisme comportant une paroi frontale (12) délimitant l'avant de l'habitacle (14), cette paroi s'étendant entre les colonnes latérales (16) de la carrosserie (10),
procédé **caractérisé en ce que**
un élément de support (30) s'étendant dans la direction transversale du véhicule s'appuie contre le côté avant (33) de la paroi frontale (12) et chevauchant au moins par zones, les colonnes (16) du véhicule.
